# EUROPEAN PATENT APPLICATION

(11) **EP 1 076 402 A2**
(43) Date of publication of application: **14.02.2001**
(21) Application number: 00306774.1
(22) Date of filing: 09.08.2000
(51) Int. Cl.: H02K 29/03

(54) **A permanent magnet electric motor**

(30) Priority: 11.08.1999 JP 22716899
(71) Applicant: Nihon Riken Co., Ltd., Oota-ku, Tokyo (JP); Cosmos Co., Ltd., Ibaraki-shi, Osaka (JP)
(72) Inventor: Kawai, Teruo, Tokyo (JP)
(74) Representative: Charlton, Peter John

(57) **Abstract**

A permanent magnet electric motor comprises a stator (20) including a stator ring (22) integrally formed of a magnetic material into a ring shape and a plurality of stator salient poles (24) disposed on the outer periphery of the stator ring (22) at even intervals, and a rotor (10) provided with permanent magnets (12a) disposed at equal intervals and opposing the inner periphery of the stator ring (22). The permanent magnets (12a) are allowed to rotate along the inner periphery of the stator ring (22). The rotor (10) is synchronously driven by supplying the exciting coils (24b) of the stator salient poles (24) with an exciting current according to a predetermined order at a predetermined timing for providing a desired excitation polarity, by means of an excitation controller (30). In the state where no exciting coils (24b) are excited, the rotor (10) provided with the permanent magnets (12a) is rendered rotatable along the inner periphery of the stator ring (22) at substantially no load, and hence, the motor exhibits a good startup characteristic.

## Description

### Field of the Invention

The present invention relates to an electric motor utilizing permanent magnets, and more particularly, to a permanent magnet electric motor that exhibits excellent startup characteristics and is capable of achieving high efficiency.

### Background to the Invention

There have so far been developed various types of electric motors as a system for converting electric energy into a mechanical output such as a torque. In these conventional electric motors, electromagnets are used in either or both the stator or/and the rotor. There are types of motors (such as induction motors) that generate a rotating magnetic field by means of electromagnets, and cause the rotor to follow this magnetic field; and types of motors (such as common, direct current electric motors) having a rotor, whose polarity can be inverted, rotatably disposed in the magnetic field of a permanent magnet stator to obtain a torque by magnetic flux interaction between the rotor and the stator.

There have been made various attempts to enhance the energy conversion efficiency in such conventional electric motors by making use of magnetic fluxes generated from permanent magnets. The applicants have so far tested and developed many different torque generators having various configurations, particularly with the aim of suitably controlling the distribution of the magnetic flux generated by the permanent magnets, in order to reduce the magnetic force working against the output torque as much as possible, and to thereby increase the output torque and improve the efficiency in converting electromagnetic energy into mechanical energy. For example, in the Japanese Patent Laid-open Publication No. Hei 7-7907, there is proposed a power generating apparatus capable of improving the energy conversion efficiency by adding permanent magnets to the rotor. These power generating apparatuses, developed and proposed by the present inventors, were constructed so that a magnetic member is interposed between the permanent magnet attached to the rotor and the electromagnet of the stator, and designed so that the magnetic flux existing between the excited stator electromagnet and the permanent magnet converges in the vicinity of a virtual line connecting both members within the magnetic member. Their aims were to prevent occurrence of a pull-back of the rotor caused by the attraction force imparted by a non-excited electromagnet disposed in the counter-rotational direction of the rotor, which disadvantageous phenomenon having almost always been overlooked in the past.

However, test results in energy conversion efficiency, generated-torque and other performances for various prototypes showed that depending on the size of the magnetic member attached to the permanent magnet of the rotor, or on the structure of the stator electromagnet, the magnetic flux domain could not be obtained in the magnetic member, and it was not possible to obtain a sufficient improvement in efficiency. Further, since the permanent magnets are incorporated in the rotor, there have been found problems such as that when none of the stator electromagnets are energized, an attraction force sometimes works between each permanent magnet and a nearby stator electromagnet, causing the rotor to be strongly locked and resulting in a difficulty in startup.

### Summary of the Invention

According to the present invention, a permanent magnet electric motor comprises a stator comprising an integrally formed ring-shaped magnetic body, and a plurality of excitation means disposed along the outer periphery of the magnetic body; a rotor (10) having at least one magnetized portion that opposes the inner periphery of the ring-shaped magnetic body of the stator for rotation along the inner periphery of the ring-shaped magnetic body; and an exciting current control means for supplying an exciting current to the excitation means of the stator according to a predetermined order, at a predetermined timing, and for providing a desired excitation polarity.

In the present invention, when the excitation means is not excited, the rotor provided with the magnetized portion is rendered rotatable along the inner periphery of the stator at virtually no load; and when the excitation means is excited by the exciting current control means, each of the magnetized portions of the rotor is attracted by the magnetic flux generated by each of the excitation means magnetized with reverse polarity, and is synchronously driven to follow the direction in which the magnetic pole of the excitation means moves.

The ring-shaped magnetic body is preferably provided with a plurality of reduced-diameter-portions with a reduced cross section located substantially in the mid-point between a pair of adjacent excitation means.

Further, it is preferred that a magnetic member is interposed between the magnetized portion of the rotor and the ring-shaped magnetic body of the stator.

In the present invention, the magnetic attraction force acting between the magnetized portions in the rotor and the ring-shaped magnetic body in the stator are balanced when none of the excitation means provided in the stator are excited. Therefore, the rotor can be rotated by applying substantially no load thereto.

When the excitation means of the stator are excited by the exciting current control means, each of the magnetized portions of the rotor is attracted by a nearby excitation means of the stator having a reverse polarity. Therefore, a rotating force is applied to the rotor by sequentially switching the excitation means to be excited in a predetermined order and at a predetermined timing so that they possess a desired excitation polarity.

By providing a reduced-diameter-portion with a reduced cross section substantially in the mid point between a pair of adjacent excitation means of the stator, the magnetic flux circulated from one excited excitation means to another excitation means having a reversed polarity can be reduced.

Further, by interposing a magnetic member between the magnetized portion of the rotor and the ring-shaped magnetic body of the stator, the magnetic flux from the magnetized portion is converged within the magnetic member so as to connect the magnetized portion and a nearby excitation means having a reversed polarity.

### Brief Description of the Drawings

Examples of the present invention will now be described in detail with reference to the accompanying drawings, in which:
Fig. 1 shows a structure of a permanent magnet electric motor according to one embodiment of the present invention;
Fig. 2 is a first drawing showing an operation of the permanent magnet electric motor according to one embodiment of the present invention;
Fig. 3 is a second drawing showing an operation of the permanent magnet electric motor according to one embodiment of the present invention;
Fig. 4 is a third drawing showing an operation of the permanent magnet electric motor according to one embodiment of the present invention;
Fig. 5 shows a structure of a permanent magnet electric motor according to another embodiment of the present invention;
Fig. 6 is a drawing showing a structure of a permanent magnet electric motor according to still another embodiment of the present invention;
Fig. 7 is a first drawing showing a structure and an operation of a permanent magnet electric motor according to a related-art example; and
Fig. 8 is a second drawing showing a structure and an operation of the permanent magnet electric motor according to the related-art example.

### Detailed Description

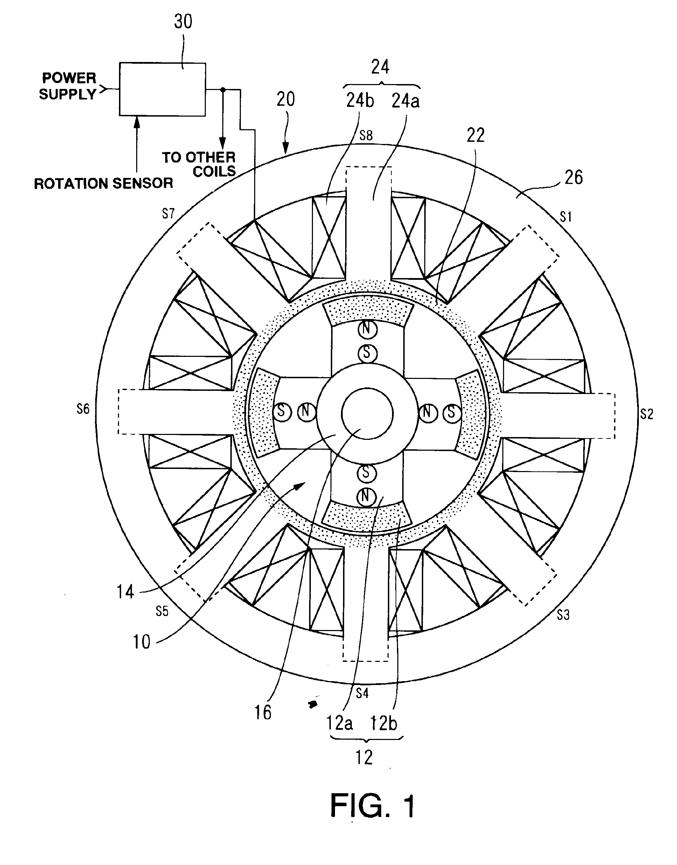

Figs. 1 to 4 are front views showing the general structure of a permanent magnet electric motor according to an embodiment of the invention. Here, in order to clearly show the basic structure and operation of the apparatus, portions such as housings or frames of the apparatus, which are considered to be unessential for explanation of the invention, are therefore omitted from the illustration.

As shown in FIG. 1, the permanent magnet electric motor of the present embodiment comprises a rotor 10 having a plurality of rotor salient poles 12, and a ring-shaped stator 20 having a plurality of stator salient poles 24.

The rotor 10 has a plurality of rotor salient poles 12. The salient poles 12 are disposed at equal intervals along the outer periphery of a rotor hub 14 formed virtually in a columnar shape, and are projected outwardly in radial direction. In the present embodiment, there are four pieces of the rotor salient poles 12 fixed on the outer periphery of the rotor hub 14 at an interval of 90°. The rotor hub 14 may be integrally formed from a magnetic material such as iron. By forming the rotor hub 14 by laminating a plurality of thin plates which are made from such a magnetic material and have the same shape, the eddy currents generated within the rotor hub 14 can be suppressed. Therefore, it is possible to reduce the loss that would otherwise be caused by the generation of the eddy currents within the rotor hub 14 while the apparatus is in operation.

Each of the rotor salient poles 12 comprises a permanent magnet 12a (i.e. a magnetized portion), and a magnetic material head 12b. The permanent magnets 12a are made to have a virtually rectangular-parallelepiped shape, and are fixedly disposed on the outer peripheral surface of the rotor hub 14 such that the end portions (in the rotor's radial direction) of adjacent rotor salient poles 12 have opposite magnetic polarities. In other words, the permanent magnets 12a provided for each of the rotor salient poles 12 are fixedly disposed so that the magnetic pole of the outer end portion of one salient pole 12 (i.e., the end portion located at the rotor's outer radial direction) is different from the magnetic pole of an end portion of an adjacent rotor salient pole 12.

At the tip end portion of each rotor salient pole 12, there is fixedly disposed a magnetic material head 12b formed in a virtually arc shape so as to fit to the inner peripheral shape of a stator ring 22 described later on. The magnetic material head 12b is fixedly interposed between the stator ring 22 and the permanent magnet 12a. The shape of the magnetic material head 12b is not limited to the virtually arc shape in the present embodiment, but it can assume other suitable shapes and sizes determined through prototype tests. Here, the magnetic flux from the permanent magnet 12a converges within the magnetic material head 12b in a manner so that it connects to a nearby stator salient pole 24 having an opposite polarity (described later on). Thus, there is obtained an effect of reducing a magnetic interaction occurring between the permanent magnet and other stator salient poles 24, which interaction would hinder the rotation of the rotor 10. In other embodiments, the magnetic material head 12b may be omitted and the permanent magnet 12a may be arranged to directly oppose the stator ring 22.

In the center of the rotor hub 14, there is fixedly inserted a rotor shaft 16. Both ends of this rotor shaft 16 is rotatably supported by bearings (not shown). Namely, there is maintained a fixed air gap between the stator ring 22 and the magnetic material heads 12b, which are provided at the tip ends of the rotor salient poles 12 disposed at a uniform interval along the outer periphery of the rotor hub 14. This allows the magnetic material heads 12b to rotate along the inner periphery of the stator ring 22.

The stator 20 comprises a stator ring 22 made from a magnetic material formed into a ring shape, and a plurality of stator salient poles 24, which act as excitation means, arranged at equal intervals along the outer periphery of the stator ring 22 and projecting outwardly in the radial direction. In the present embodiment, there are eight sets of stator salient poles 24 disposed at an interval of 45°, and they are arranged such that if one of the four sets of the rotor salient poles 12 opposes a stator salient pole 24, each of the other rotor salient poles 12 would also oppose a stator salient pole 24. Such a configuration serves for effective utilization of the magnetic force, supplied from each stator salient pole 24, in each rotor salient poles 12, the details of which will be explained later.

Each stator salient pole 24 has a core 24a projecting outwardly from 8 points of the stator ring 22 in the radial direction, and an exciting coil 24b wound around each of the cores 24a. Each exciting coil 24b is electrically connected to the output of a later described excitation controller 30 (i.e., exciting current control means). Further, the outer end portion of each stator salient poles 24 (i.e., the outer side of stator 20) is connected by a ring shaped yoke 26 which constitutes a magnetic path allowing the magnetic flux supplied from the magnetic pole on one side of the stator salient pole 24 to flow therein.

The excitation controller 30 is a current switching device for controlling the direction and on/off switching timing of the exciting current supplied to the exciting coil 24b of each stator salient pole 24. It generally comprises current switching elements such as transistors and thyristors, and a control circuit for controlling the on/off timing of the switching elements. In the permanent magnet electric motor according to the invention, since the rotor 10 is basically driven in synchronism with the excitation control of the stator salient pole 24, an open loop configuration can be employed with no problem in view of drive control. However, speed control of the rotor 10 can be realized by suitably using various existing sensors, such as photosensors and rotary encoders combined with a light shielding plate having an appropriately shaped notch (not shown), in order to detect the angle of rotation of the rotor 10. In such a case, the output signal of the rotation sensor is input to the control circuit of the excitation controller 30 so as to be used as a trigger signal for controlling the on/off timing of the current switching elements in accordance with the angle of rotation of the rotor 10.

Now, the operation of the permanent magnet electric motor with the above described configuration according to an embodiment of the invention will be described with reference to Figs. 1 to 4.

First, Fig. 1 shows a power OFF state, i.e., a state in which none of the exciting coils 24b of the stator salient poles 24 are supplied with an exciting current and thus none of the stator salient pole 24 is excited. In this state, the permanent magnet 12a provided on each rotor salient poles 12 of the rotor 10 exerts magnetic attraction force onto the stator ring 22 through the magnetic material head 12b. Accordingly, each of the rotor salient poles 12 is subjected to a magnetic attraction force only in the outward radial direction. Thus, from a point of view of the rotor shaft 16 inserted in the center of the rotor 10, the attraction force exerted outwardly on each of the rotor salient poles 12 is substantially balanced. Such an equilibrium state of magnetic force is attributable to the fact that the lines of magnetic force distributed to the stator ring 22 are virtually symmetric with respect to the center of the rotor 10. The above-described state is kept substantially unchanged even if the rotor 10 is rotated around the rotor shaft 16. Therefore, even though an attraction force works between the stator ring 22 and each individual salient pole 12, the rotor 10 as a whole can be rotated with substantially no load applied thereto. The "mass of small dots" in FIG. 1 shows a qualitative distribution of the magnetic flux which illustrates the above-described state. As shown in FIG. 1, a magnetic flux from the N pole of a permanent magnet 12a disposed in each rotor salient pole 12 flows into the opposed stator ring 22 through the magnetic material head 12b, and further flows into the S poles of an adjacent rotor salient poles 12 with a reverse polarity.

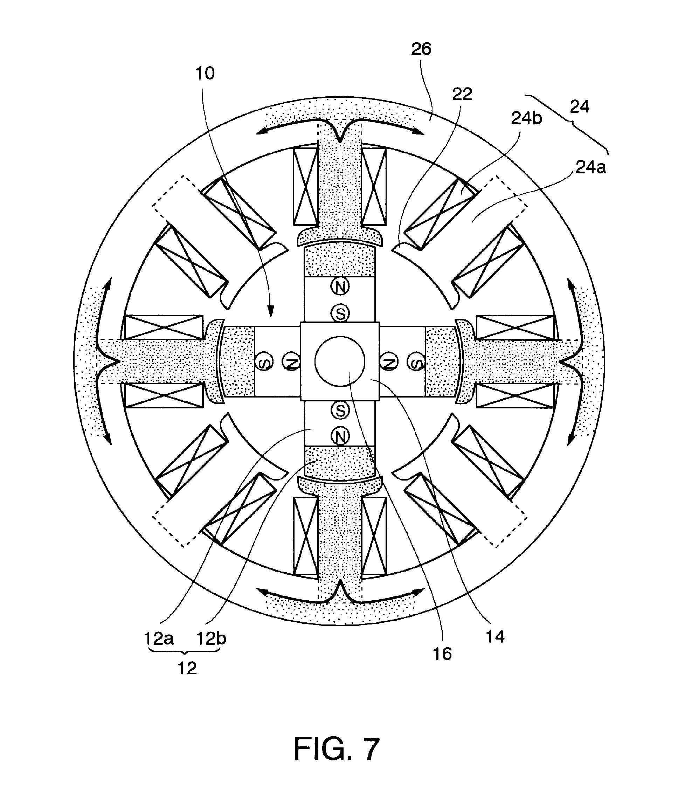

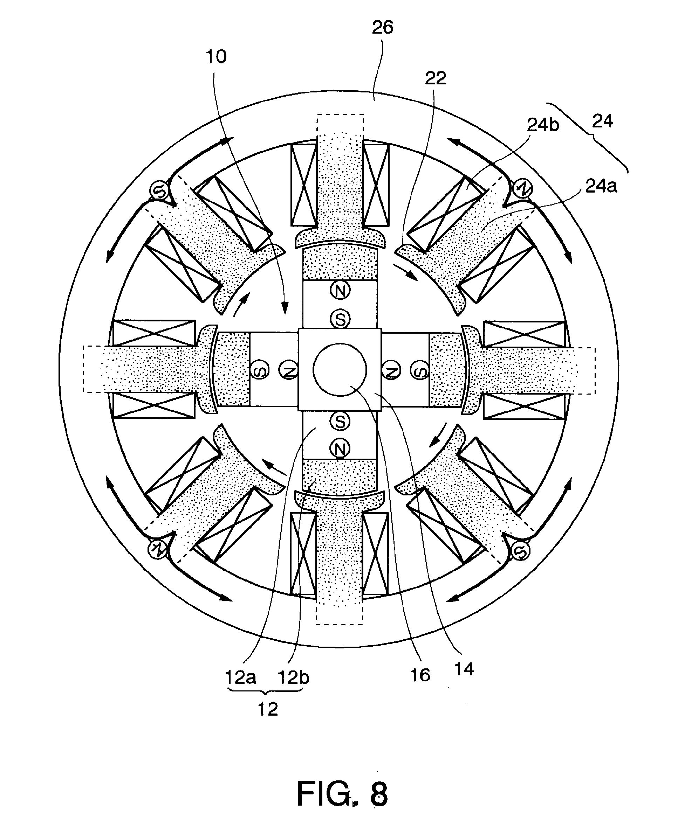

Such characteristic of the permanent magnet electric motor of the present embodiment leads to a good startup of the rotor 10, enabling the rotor 10 to immediately follow the excitation of a specific stator salient pole 24. As a comparison, we have shown in FIGS. 7 and 8 a structure and an operation of a related-art electric motor. While the structure of its rotor is similar to the one of the present invention, the stator salient poles 24 are separated from each other at their inward end portions. In such a configuration, although an attraction force works between the permanent magnet 12a of each rotor salient pole 12 and each stator salient pole 24 opposing thereto, since there is an air gap between the stator salient poles 24 circumferentially adjacent to each other, the magnetic flux is not circulated. Therefore, different from the present embodiment described above, the lines of magnetic force are not in an equilibrium state, even when the motor is turned OFF and none of the stator salient poles 24 are excited; hence, the rotor salient poles 12 tend to keep being attracted to the opposing stator salient poles 24. Fig. 8 shows a state where a stator salient pole 24 located ahead of a rotor salient pole 12 in the rotating direction is excited to have a reverse polarity in order to rotatably drive the rotor 10 in a clockwise direction. In this state, though each rotor salient pole 12 receives a magnetic attraction force from the stator salient pole 24 located ahead in the rotating direction and having a reverse polarity, there still remains a magnetic attraction force between the rotor salient pole 12 and the opposing non-excited stator salient pole 24. In case a higher torque is desired in such a motor, the magnetic intensity of the permanent magnet 12a provided in the rotor salient pole 12 is increased; but if so, the attraction force acting between each of the rotor salient poles 12 and the opposing stator salient poles 24 would increase all the more, and when the power is turned OFF, the rotor would be locked to the stator by this magnetic attraction force. From this reason, it was difficult to start up such a motor by excitation of adjacent stator salient poles 24. However, in the present invention, such a difficulty in startup has been substantially overcome.

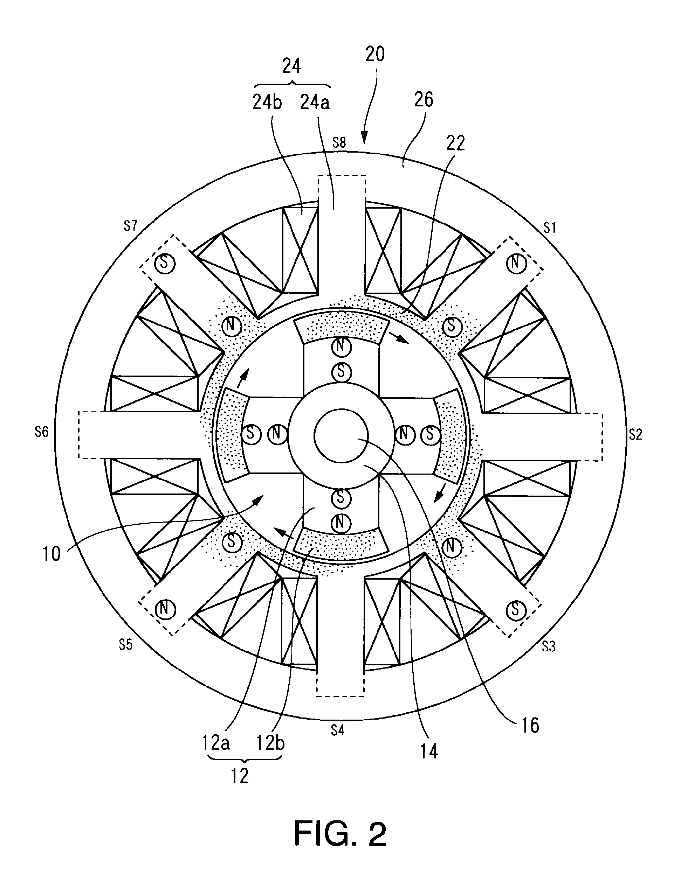

Fig. 2 shows an initial state in the startup of the motor according to the present embodiment, where exciting coils 24b of specific stator salient poles 24 have been excited to start up the motor. As described above, the motor of the embodiment has 8 sets of stator salient poles 24 in the stator 20 and 4 sets of rotor salient poles 12 in the rotor 10, each of which being disposed at a uniform interval; thus, every other stator salient pole 24 is opposed to a rotor salient pole 12 of the rotor 10, as shown in FIG. 2.

For the sake of discriminating each of the stator salient poles 24, the stator salient poles 24 will be denoted by reference numerals S1 to S8 as shown in FIG. 2. In the initial state of the startup, among the coils 24b of the stator salient poles S1 to S8, electric current is supplied to the appropriate coils so that S1 and S5 are excited to have an S polarity, and S3 and S7 are excited to have an N polarity. At this time, as described above, the exciting currents supplied to the respective exciting coils 24b are controlled by the excitation controller 30. With the relevant stator salient poles 24 excited as described above, the salient poles S1 and S5 attract the N poles of the rotor 10, and the salient poles S3 and S7 attract the S poles of the rotor 10. As a result of this magnetic attraction force, the rotor 10 starts to rotate clockwise as shown in the drawing.

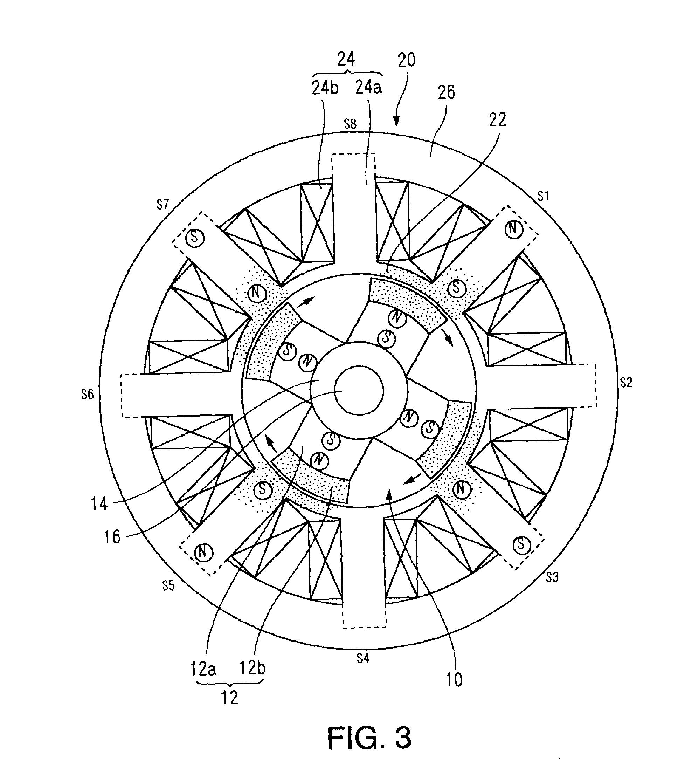

Then, when the rotor 10 fixed on the rotor shaft 16 rotates about half the interval of the stator salient pole 24 in the clockwise direction, the state shown in FIG. 3 is brought about. Now, as is illustrated, the rotor salient poles 12 of the rotor 10 are located almost in the mid-position of the excited salient poles S1, S5, S3, S7 located ahead in the rotating direction, and the non-excited salient poles S8, S4, S2, S6 located in the counterrotating direction, respectively. The rotor salient poles 12 are still attracted to the magnetized salient poles S1, S5 and S3, S7, which are excited to have an opposite magnetic polarity and located ahead in the clockwise direction, and thereby, the rotor 10 continues to rotate clockwise.

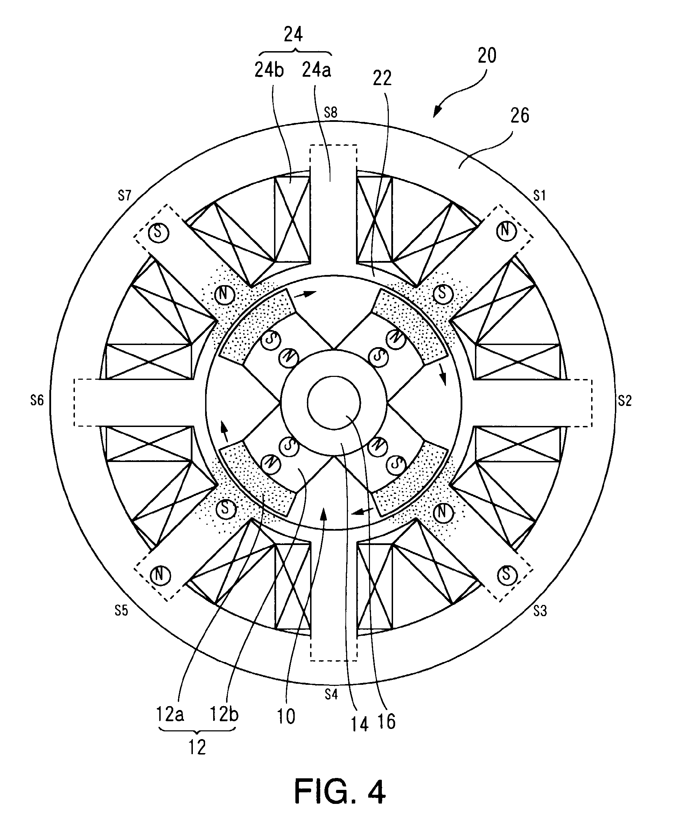

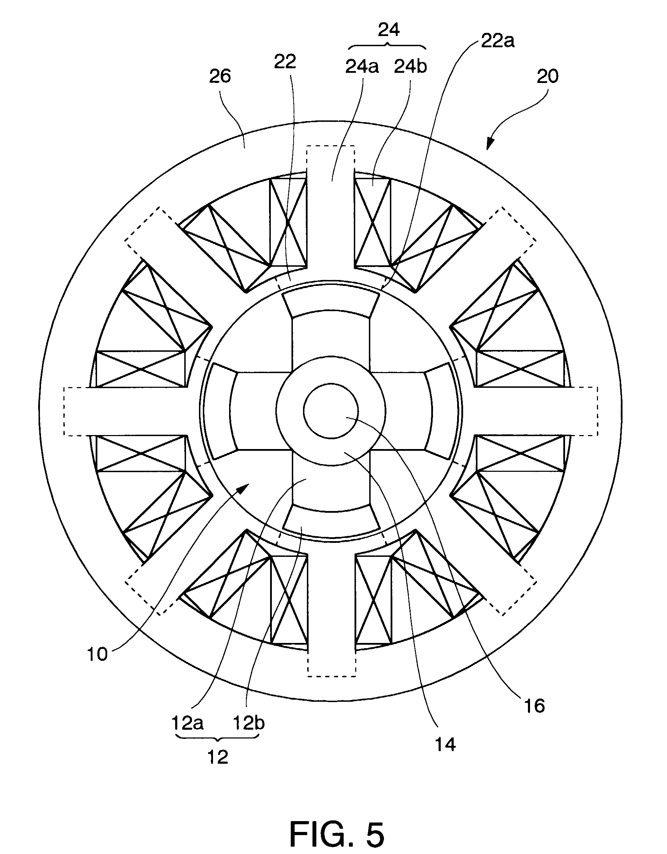

When the rotor 10 is further rotated approximately another 1/2 interval in the clockwise direction from the state shown in FIG. 3, the state shown in FIG. 4 is brought about. At this time, the rotor salient poles 12 of the rotor 10 have all arrived at positions virtually opposing the excited stator salient poles S1, S5, S3, and S7. In this state, the magnetic attraction forces acting between each of the rotor salient poles 12 and the excited stator salient poles S1, S5, S3 and S7 are exerted only in the radial direction of the rotor 10, as shown in the drawing, and they are no longer effective to function as a drive force to rotate the rotor 10. Then, the current supplied to each of the coils 24b of the stator salient poles S1, S3 and S5, S7 which have so far been excited is stopped, and now, the exciting current is supplied to the coils 24b of the stator salient poles S2, S6, S4 and S8 which are in a non-excited state and located ahead in the rotor rotating direction, to thereby excite these poles. Thus, the rotor 10 is in the state as shown in FIG. 5. This corresponds to the state shown in FIG. 2, i.e., the state in which the rotor 10 is rotated 45° in the clockwise direction, and each of the rotor salient poles 12 is again imparted the rotative driving force caused by the magnetic attraction force acting between the rotor salient poles 12 and the stator salient poles S2, S6, S4 and S8, which are newly excited to have the reverse polarity and located ahead in the clockwise direction. As a result, the rotor 10 can continue to rotate clockwise.

When controlling the rotation speed of the rotor 10, the timing to switch the exciting current supplied to the coil 24b of each of the stator salient poles 24 is determined by the number of poles "n" of the stator 20 (i.e. the number of stator salient poles 24 provided in the stator 20), and it will be necessary to switch it at every (360/n)°. Since the number of poles "n" of the stator 20 is 8 (n = 8) in the present embodiment, the stator salient poles 24 to be excited are switched at intervals of (360/8) = 45□ in the clockwise direction as shown in Table 1 below. However, the direction in which the stator salient poles 24 to be excited is switched can be determined according to the desired rotating direction of the rotor.

**[Table 1]**

| Rotation Angle of Rotor | Excited Polarity of Stator Salient Poles | | | | | | | |
|---|---|---|---|---|---|---|---|---|
| | S1 | S2 | S3 | S4 | S5 | S6 | S7 | S8 |
| 0□ | S | | N | | S | | N | |
| 45□ | | S | | N | | S | | N |
| 90□ | N | | S | | N | | S | |
| 1350 | | N | | S | | N | | S |
| 180□ | S | | N | | S | | N | |
| 225□ | | S | | N | | S | | N |
| 270□ | N | | S | | N | | S | |
| 3150 | | N | | S | | N | | S |
| 360□ | S | | N | | S | | N | |

It has been so far described that the excitation is switched when each rotor salient pole 12 of the rotor 10 has arrived at a position where it substantially opposes the stator salient pole 24 that is excited to have a reverse polarity. However, to be more strict, the optimum switching timing of the exciting current can be found by: making sequential analysis, through finite element method, of the change in the magnetic flux distribution in the course of each rotor salient pole 12 approaching the stator salient pole 24 excited with reverse polarity; or, measuring and comparing the output characteristics by using the excitation switching timing of the stator salient pole 24 as a parameter. By doing so, not only are the output torque and energy conversion efficiency increased, but also variation in the torque is suppressed and other further effects are obtained. Further, satisfactory result will be obtained by adjusting the rotation sensor for detecting the angle of rotation of the rotor 10 such that the output thereof meets the optimizing condition.

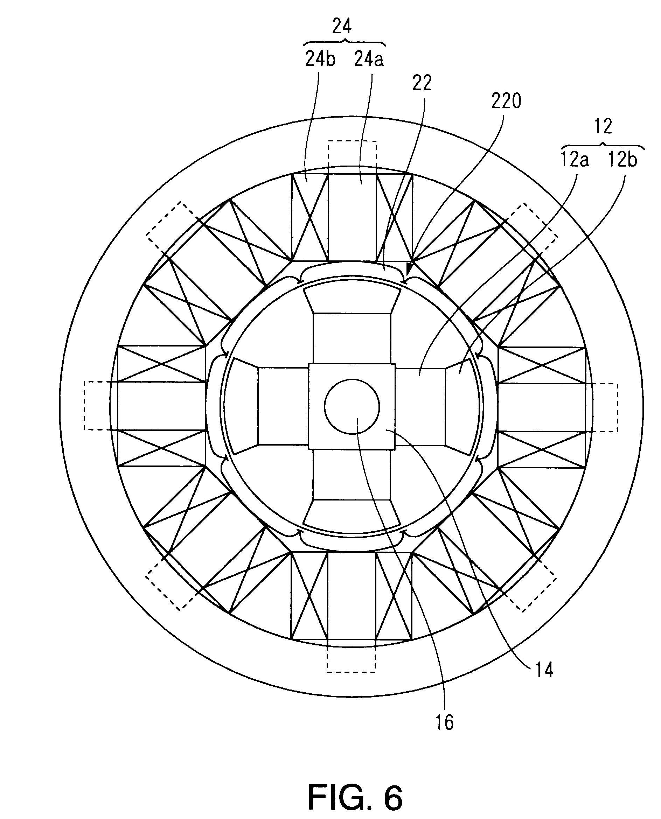

Referring now to FIGS. 5 and 6, other embodiments of the present invention will be described. Here, the configuration of both the stators 20 are different from the one of the first embodiment shown in FIG. 1. First, in the electric motor shown in FIG. 5, the ring stator 22 is formed into an integral structure by: circumferentially extending each of the inward-radial end portions of each stator salient poles 24; and abutting the adjacent portions thereof together as indicated by broken lines 22a in the drawing. It is to be understood that, although the stator ring 22 of the above-described embodiment has been integrally formed from the start, the same effects can be obtained from both separately-structured stator rings and integrally formed rings, and either one can be used according to the convenience of designing and manufacturing.

Fig. 6 shows a configuration in which a reduced-diameter-portion 220 with a reduced cross section is provided substantially in the mid-point between a pair of adjacent stator salient poles 24 of the stator ring 22. Since this reduced-diameter-portion 220 thus provided constitutes a reluctance for the magnetic circuit formed in the stator ring 22, the magnetic flux circulated from one excited stator salient pole 24 to another salient pole 24 having a reverse polarity is reduced. Therefore, the magnetic flux generated by each excited stator salient pole 24 can be more efficiently converted into the magnetic force for attracting the rotor salient pole 12.

In the permanent magnet electric motor of the present invention, the magnetic attraction forces acting between the permanent magnets in the rotor and the ring-shaped magnetic body (e.g. the stator ring 22) in the stator are balanced when none of the excitation means (e.g. the stator salient poles 24) of the stator are magnetized. Therefore, the rotor can be rotated by applying substantially no load thereto, and hence, the motor is provided with a good startup characteristic.

When the excitation means of the stator are excited by an exciting current control means (e.g. the excitation controller 30), each of the permanent magnets in the rotor is attracted by a nearby excitation means of the stator having a reverse polarity. Therefore, by sequentially controlling the excitation means to be excited so that they are switched in a predetermined order at a predetermined timing to possess a desired excitation polarity, a rotating force is imparted to the rotor, and it becomes possible to obtain a high torque at high efficiency.

## Claims

1. A permanent magnet electric motor comprising:
a stator (20) comprising a ring-shaped magnetic body (22), and a plurality of excitation means (24) disposed along the outer periphery of said magnetic body (22);
a rotor (10) having at least one magnetized portion (12) that opposes the inner periphery of said ring-shaped magnetic body (22) of the stator (20) for rotation along the inner periphery of said ring-shaped magnetic body; and
an exciting current control means (30) for supplying an exciting current to said excitation means (24) of the stator (20) according to a predetermined order, at a predetermined timing, and for providing a desired excitation polarity; wherein
when said excitation means (24) is not excited, said rotor (10) provided with the magnetized portion is rendered rotatable along the inner periphery of said stator (20) at virtually no load, and
when said excitation means (24) is excited by said exciting current control means (30), each of said magnetized portions (12) of the rotor (10) is attracted by the magnetic flux generated by each of said excitation means magnetized with reverse polarity, and is synchronously driven to follow the direction in which the magnetic pole of said excitation means moves.

2. A permanent magnet electric motor according to claim 1, wherein said ring-shaped magnetic body (22) is provided with a plurality of reduced-diameter-portions with a reduced cross section located substantially in the mid-point between a pair of said adjacent excitation means.

3. A permanent magnet electric motor according to claim 1 or 2, wherein a magnetic member (12b) is interposed between said magnetized portion (12) of the rotor (10) and said ring-shaped magnetic body (22) of the stator (20).

4. A permanent magnet electric motor according to any preceding claim, wherein said ring-shaped magnetic body (22) is formed from a plurality of segments into its integral structure.
